# EUROPEAN PATENT SPECIFICATION

(11) **EP 2 535 273 B1**
(45) Date of publication and mention of the grant of the patent: **26.02.2014**
(21) Application number: 11382209.2
(22) Date of filing: 17.06.2011
(51) Int. Cl.: B64D 39/00, B64D 47/06

(54) **Aircraft refueling boom with a nozzle illuminating module**
Flugzeugtankausleger mit einem die Düse beleuchtenden Modul
Bras de ravitaillement d'avion doté d'un module d'éclairage de la buse

(43) Date of publication of application: 19.12.2012
(73) Proprietor: EADS Construcciones Aeronauticas, S.A., 28022 Madrid (ES)
(72) Inventor: Hernàndez Sànchez, Luis Miguel, 28906 Getafe, Madrid (ES)
(74) Representative: Elzaburu Marquez, Alberto

(56) References cited:
- EP-A2- 2 014 552
- WO-A1-2007/104942
- US-A- 4 158 885
- US-A- 4 398 685
- US-A- 4 633 376
- US-A1- 2005 017 130

## Description

### FIELD OF THE INVENTION

The present invention relates generally to aircraft refueling booms and more specifically to a boom having a nozzle illuminating module.

### BACKGROUND

An aircraft refueling boom is a beam fuel-tight unit attached to its forward end to a tanker aircraft having aerodynamic lift surfaces called ruddevators used to aerodynamically control the position of the boom in elevation and azimuth that provides a fuel passage from the tanker to the boom nozzle.

The outer end portion of the boom is a telescoping section for inward and outward movement.

The receptor aircraft is equipped with an aerial refueling receptacle which engages with the boom nozzle for the refueling operation.

The boom operator located in the tanker aircraft guides the boom so as to line the boom nozzle with the receptor aircraft receptacle. When the boom nozzle is aligned with the receptor receptacle the boom operator extends the telescoping portion, so that the nozzle engages the receptacle to complete the coupling which must be accomplished and maintained within a predetermined refueling envelope to avoid a disconnection.

During daylight and favorable weather conditions the receptor pilot may see clearly the tanker aircraft so that the approaching operation does not pose special difficulties for well trained pilots. However the situation change at night or in poor weather conditions.

There are known several proposals in the art in this respect providing light indications to the receptor pilot such as the guidance light display mounted on the aft belly of the tanker aircraft disclosed in US 4,158,885 or providing suitable illumination means such as the infrared illuminating means disclosed in US 4,398,685. However none of the known proposals provides the receptor pilot with a good vision of the boom nozzle at night or in poor weather conditions.

The present invention is focused to the solution of this problem.

It is also known document US4633376 which discloses a fuel receptacle lighting system for aerial refueling of receiver aircraft during night time operations. The receptacle lighting system is mounted on a tanker aircraft for enhancing a boom operator's visual view of a fuel receptacle area on the receiver aircraft without blinding or distracting the receiver pilot.

A black light can be attached to the end of the boom for additional illumination. This document corresponds to the preamble of claim 1.

Document WO2007/104942 discloses in a reception coupling and drogue assembly, light sources which are arranged around the wall of the probe passage adjacent the opening. The light sources each serve to illuminate the opposing part of the drogue, giving good visibility to the pilot of the following aircraft.

It is also known document US2005/017130 which also discloses a method and an apparatus for illumination of aerial refueling hoses. In one embodiment, a conduit for transferring a flowable material includes a wall member. A plurality of optical fibers arc at least one of formed within an outer layer of the wall member and disposed on an outer surface of the wall member. A light emitted by the optical fibers illuminates the conduit. In an alternate aspect, the optical fibers may be replaced with a luminescent outer portion.

Finally, it is also known document EP2014552 disclosing Pilot Director Lights (PDLs) mounted on the exterior of a refueling tanker aircraft utilizing visible light emitting diodes (LEDs) and infrared LEDs as light sources to provide visual information to the pilot of an approaching aircraft.

### SUMMARY OF THE INVENTION

An object of the present invention is to provide an aircraft refueling boom capable for performing the refueling operation at night or at poor weather conditions.

Another object of the present invention is to provide an aircraft refueling boom capable for performing safely the refueling operation without using radio communications between the boom operator and the receptor pilot.

These and other objects are met by a refueling apparatus for interconnecting a tanker aircraft with a receptor aircraft in flight comprising a boom device for being joined to said tanker aircraft by means of a mechanical articulation, said boom device comprising a boom beam, a telescoping section with an inner fuel conduit having at its distal end a tip section and a nozzle, said tip section comprising an illumination module for illuminating said nozzle at night or at poor weather conditions so that the nozzle becomes visible for the receptor aircraft pilot when approaches to the tanker aircraft.

In embodiments of the present invention, said illumination module comprises at least a source of visible light and a source of infrared light and means for selecting a suitable light for providing a visual information of the state of the boom during the refueling operation. Therefore it is achieved an aircraft refueling boom that can use visible light or infrared light for illuminating the nozzle at night depending of the need to avoid the visibility of the refueling operation to external observers.

According to the present invention, said source of visible light is a source of light arranged for emitting light of a predetermined color for identifying a particular state of the boom during the refueling operation. Therefore it is achieved an aircraft refueling boom that provides visual indications of the state of the boom to the pilot aircraft that are considered much more effective than verbal communications by radio.

In embodiments of the present invention, said source of visible light is a RGB device arranged for emitting a green light when the length of the deployed telescoping section is a suitable length for the contact with the receptor aircraft; for emitting a red light when the length of the deployed telescoping section is not a suitable length for the contact with the receptor aircraft; and for emitting a yellow light when the length of the deployed telescoping section is close to be an unsuitable length for the contact with the receptor aircraft. Therefore it is achieved an aircraft refueling boom that provides visual indications of the deployment of the boom at night or at poor weather conditions using the same color code used for the same purpose in the boom painting of known aircraft refueling boom devices.

In embodiments of the present invention, wherein said source of visible light is a RGB device arranged for emitting light of a predetermined color as an alternative to a radio communication for transmitting information to the pilot of the receptor aircraft. Therefore it is achieved an aircraft refueling boom that can provide visual indications instead of radio communications (for safety reasons) regarding a refueling operation (for example that the tanker aircraft is ready or that it is not ready). In this case the boom operator deploys the boom just as a communication means for transmitting information through the nozzle lights.

In embodiments of the present invention, said illumination module comprises at least two illuminating units comprising a source of a visible light and a source of infrared light suitable positioned for facilitating the vision of the nozzle both to the receptor aircraft pilot and to the boom operator in the tanker aircraft (being preferably located the first unit in the upper zone and the second unit in the lower zone of said tip section) and means for selecting a suitable light for providing a visual information of the state of the boom during the refueling operation, particularly for emitting green light, red light or yellow light in the above-mentioned situations or for transmitting information to the receptor pilot when the radio can not be used. Therefore it is achieved an aircraft refueling boom with nozzle illuminations means that can be used for improving the visibility of the nozzle both for the boom operator and for the receptor pilot and also for transmitting information from the boom operator to the receptor pilot.

In embodiments of the present invention, the sources of visible light of said illuminating units are RGB devices comprising red light emitting diodes, green light emitting diodes and blue light emitting diodes and the sources of infrared light are infrared light emitting diodes. Therefore it is achieved an aircraft refueling boom that improves the visibility of the nozzle using efficient light emitting devices.

Other features and advantages of the present invention will be understood from the following detailed description in relation with the enclosed drawings.

### BRIEF DESCRIPTION OF DRAWINGS

Figure 1 shows a side view of a refueling boom.
Figure 2 shows schematically a side view of a tip section incorporating an illumination module according to this invention.
Figure 3 shows schematically two illumination units of said illumination module.

### DETAILED DESCRIPTION OF THE INVENTION

An aircraft refueling boom device 21 is a telescoping beam fuel-tight unit attached to its forward end to the underside fuselage tail of a tanker aircraft 11 by means of a mechanical articulation 41. Integrally attached to the boom beam 23 are aerodynamic lift surfaces 24 called ruddevators which are used to aerodynamically control the position of the boom device 21 in elevation and azimuth.

The outer end portion 25 of the boom device 21 is a telescoping section for inward and outward movement. Located on the distal end of the telescoping tube 25 is a tip section 27 and a nozzle 29. The tip section 27, designed for alleviating the loads transferred to the boom device 21 when it is engaged to the receptor aircraft is joined to the nozzle 29 through a fuel tight flanged connection 31.

The receptor aircraft, not shown, is equipped with an aerial refueling receptacle which engages with the nozzle 29 for the refueling operation.

In order to satisfy the refueling space envelope requirements (with respect to the tanker aircraft reference axes), the boom device 21 incorporates at is union with the tanker aircraft 11 a mechanical articulation 41 that provides it with two degrees of freedom and, in particular, a conical pivoting angular motion of the boom towards its pitch and roll axes.

The boom 21 is orientated towards the refueling space envelope via two ruddevators 29 (each one tied to the boom main structural tube tip via a rotary hinge) in a 'V' tail type configuration. The aerodynamically control forces to aim the boom arises by changing the incidence angle of the ruddevators with respect the free air stream. The relative positioning of each ruddevator incidence angle is achieved by an operator located in the tanker aircraft that can exercise remote control of the refueling operation via dedicated devices allocated on a control console.

The telescopic tube 25 provides fuel passage from a fixed fuel line, connected to the tanker aircraft line 33 by means of a coupling 35 integrated with the mechanical articulation 41, to the nozzle 29.

The boom operator, not shown, located in the tanker aircraft 11, guides the boom device 21 so as to line the nozzle 29 with the receptor aircraft receptacle. When the nozzle 29 is dynamically aligned with the receptor receptacle the boom operator extends the telescoping portion 25, so that the nozzle 29 engages the receptacle to complete the coupling which must be accomplished and maintained within a predetermined refueling envelope to avoid a disconnection.

In a preferred embodiment of the present invention the boom device 21 incorporates an illumination module comprising illuminating units 45, 45' located in said tip section 27 projecting lights 61, 61' over the nozzle 29 for facilitating to the receptor pilot and also to the boom operator in the tanker aircraft 11 the vision of the nozzle 29 at night or at poor weather conditions. The first illuminating unit 45 is placed in the upper zone of the tip section 27 so that the receptor pilot can view the nozzle 29 illuminated by said light 61 and the second illuminating unit 45' is placed in the lower zone of the tip section 27 so that the boom receptor pilot can view the nozzle 29 illuminated by said light 61'.

In safe refueling operations at night said lights 61, 61' are visible lights. Otherwise, specially when there is a need of avoiding the visibility of the refueling operation to external observers, they are infrared lights 61, 61'. In this case, particularly the receptor pilot shall be provided with suitable means for viewing the infrared light such as NVIS goggles.

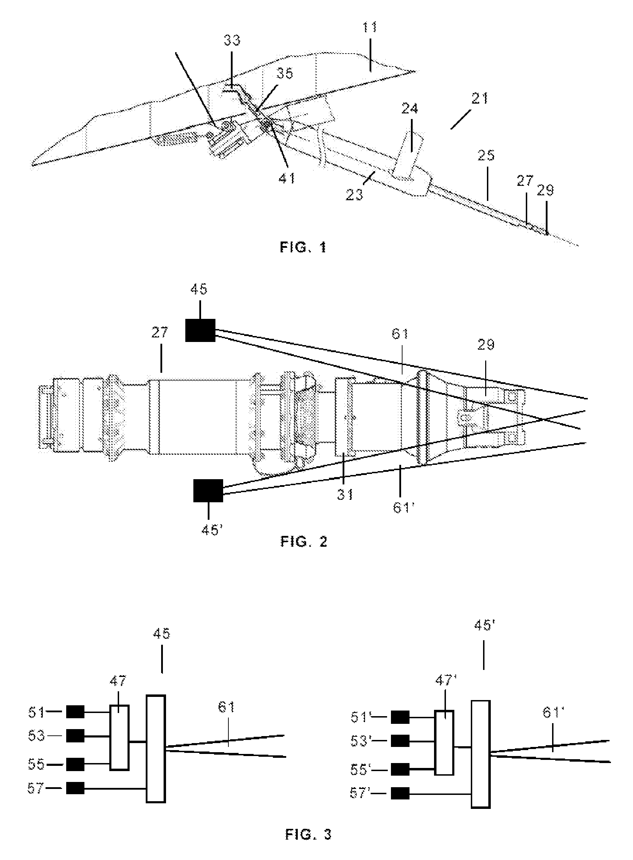

As illustrated in Figure 3 the illumination units 45, 45' comprise, on one side, sources of colored light 47, 47', such as RGB devices, comprising red light emitting diodes 51, 51', green light emitting diodes 53, 53', blue light emitting diodes 55, 55' and, on the other side, infrared light emitting diodes 57, 57'.

The illumination module also comprises control means connected to the boom device control station so that the sources of colored light 47, 47' can be arranged for emitting lights 61, 61' of different colors for different states of the boom during the refueling operation.

Among other arrangements, the illumination module can be arranged for providing a similar information to those known booms painted with bands of red, green and yellow color distributed in a manner that:
- if the receptor pilot see a red color in the area of the telescopic section 25 close to the boom beam 23 he shall understand that the length of the deployed telescopic section 25 is too short or too long for making contact;
- if the receptor pilot see a green color he shall understand that the length of the deployed telescopic section 25 is a suitable length for making contact;
- if the receptor pilot see a yellow color he shall understand that the length of the deployed telescopic section 25 is approaching an unsuitable length for making contact.
Although the present invention has been fully described in connection with preferred embodiments, it is evident that modifications may be introduced within the scope thereof, not considering this as limited by these embodiments, but by the contents of the following claims.

## Claims

1. A refueling apparatus for interconnecting a tanker aircraft (11) with a receptor aircraft in flight comprising a boom device (21)for being joined to said tanker aircraft (11) by means of a mechanical articulation (41), said boom device (21) comprising a boom beam (23) with an inner fuel conduit having at its distal end a tip section (27) and a nozzle (29), said tip section (27) comprises an illumination module for illuminating said nozzle (29) at night or at poor weather conditions so that the nozzle (29) becomes visible for the receptor aircraft pilot when approaches to the tanker aircraft (11), **characterized in that** said boom beam has a telescoping section (25), and **in that** said illumination module comprises a source of visible light arranged for emitting light of a predetermined color for identifying a particular state of the boom device (21) during the refueling operation.

2. A refueling apparatus according to claim1, wherein said illumination module comprises at least said source of visible light and a source of infrared light and means for selecting a suitable light for providing a visual information of the state of the boom (21) during the refueling operation.

3. A refueling apparatus according to claim 1 or 2, wherein said source of visible light is a RGB device arranged for:
- emitting a green light when the length of the deployed telescoping section (25) is a suitable length for the contact with the receptor aircraft;
- emitting a red light when the length of the deployed telescoping section (25) is not a suitable length for the contact with the receptor aircraft;
- emitting a yellow light when the length of the deployed telescoping section (25) is close to be an unsuitable length for the contact with the receptor aircraft.

4. A refueling apparatus according to claim 1, wherein said source of visible light is a RGB device arranged for emitting lights of predetermined colors for transmitting information to the pilot of the receptor aircraft as an alternative to a radio communication.

5. A refueling apparatus according to any of claims 1-4, wherein said illumination module comprises at least two illuminating units (45, 45') suitable positioned for facilitating the vision of the nozzle (29) both to the receptor aircraft pilot and to the boom operator in the tanker aircraft (11).

6. A refueling apparatus according to claim 5, wherein the first illumination unit (45) is located in the upper zone of said tip section (25) and the second illumination unit (45') is located in the lower zone of said tip section (25).

7. A refueling apparatus according to claim 6, wherein said illumination units (45, 45') are located at an angular distance of about 180° between them.

8. A refueling apparatus according to any of claims 6-7, wherein each of said illuminating units (45, 45') comprises a source of a visible light (47, 47') and a source of infrared light (57, 57') and means for selecting a suitable light (61, 61') for providing a visual information of the state of the boom (21) during the refueling operation.

9. A refueling apparatus according to claim 8, wherein said sources of visible light (47, 47') are RGB devices arranged for:
- emitting a green light when the length of the deployed telescoping section (25) is a suitable length for the contact with the receptor aircraft;
- emitting a red light when the length of the deployed telescoping section (25) is not a suitable length for the contact with the receptor aircraft;
- emitting a yellow light when the length of the deployed telescoping section (25) is close to be an unsuitable length for the contact with the receptor aircraft.

10. A refueling apparatus according to claim 8, wherein at least one of said sources of visible light (47, 47') is a RGB device arranged for emitting lights of predetermined colors for transmitting information to the pilot of the receptor aircraft as an alternative to a radio communication.

11. A refueling apparatus according to any of claims 9-10, wherein:
- said RGB devices (47, 47') comprise red light emitting diodes (51, 51'), green light emitting diodes (53, 53') and blue light emitting diodes (55, 55');
- said sources of infrared light (57, 57') are infrared light emitting diodes (57, 57').

12. A tanker aircraft having a refueling apparatus according to any of the preceding claims.

## Patentansprüche

1. Eine Betankungsvorrichtung zum Miteinanderverbinden eines Tankerluftfahrzeuges (11) mit einem Empfängerluftfahrzeug während des
Fluges, umfassend eine Auslegereinrichtung (21), um mit dem Tankerluftfahrzeug (11) mittels eines mechanischen Gelenkes (41) verbunden zu werden, wobei die Auslegereinrichtung (21) einen Auslegerschaft (23) mit einer inneren Treibstoffleitung umfasst, der an seinem distalen Ende einen Spitzenabschnitt (27) und eine Düse (29) aufweist, wobei der Spitzenabschnitt (27) ein Beleuchtungsmodul zum Beleuchten der Düse (29) bei Nacht oder bei schlechten Wetterverhältnissen umfasst, so dass die Düse (29) für den Piloten des Empfängerluftfahrzeuges sichtbar wird, wenn er sich dem Tankerluftfahrzeug (11) nähert, **dadurch gekennzeichnet, dass** der Auslegerschaft einen teleskopierbaren Abschnitt (25) aufweist und dass das Beleuchtungsmodul eine Quelle sichtbaren Lichts umfasst, die ausgestaltet ist zum Emittieren von Licht einer vorgegebenen Farbe zum Identifizieren eines bestimmten Zustandes der Auslegereinrichtung (21) während des Betankungsvorganges.

2. Eine Betankungsvorrichtung nach Anspruch 1, wobei das Beleuchtungsmodul mindestens die Quelle sichtbaren Lichts und eine Quelle von Infrarotlicht umfasst und Mittel zum Auswählen eines geeigneten Lichts zum Bereitstellen einer visuellen Information des Zustandes des Auslegers (21) während des Betankungsvorganges.

3. Eine Betankungsvorrichtung nach Anspruch 1 oder 2, wobei die Quelle sichtbaren Lichts eine RGB-Einrichtung ist, die ausgestaltet ist zum:
- Emittieren eines grünen Lichts, wenn die Länge des ausgefahrenen teleskopierbaren Abschnittes (25) eine geeignete Länge für den Kontakt mit dem Empfängerluftfahrzeug ist;
- Emittieren eines roten Lichts, wenn die Länge des ausgefahrenen teleskopierbaren Abschnittes (25) keine geeignete Länge für den Kontakt mit dem Empfängerluftfahrzeug ist;
- Emittieren eines gelben Lichts, wenn die Länge des ausgefahrenen teleskopierbaren Abschnittes (25) nahe ist, eine ungeeignete Länge für den Kontakt mit dem Empfängerluftfahrzeug zu sein.

4. Eine Betankungsvorrichtung nach Anspruch 1, wobei die Quelle sichtbaren Lichts eine RGB-Einrichtung ist, die ausgestaltet ist zum Emittieren von Lichtem vorgegebener Farben zum Übertragen von Information an den Piloten des Empfängerluftfahrzeuges als Alternative zu einer Funkverbindung.

5. Eine Betankungsvorrichtung nach einem der Ansprüche 1 bis 4, wobei das Beleuchtungsmodul mindestens zwei Beleuchtungseinheiten (45, 45') umfasst, die in geeigneter Weise positioniert sind zum Vereinfachen der Sicht auf die Düse (29) sowohl für den Piloten des Empfängerluftfahrzeuges als auch für die Ausleger-Bedienperson im Tankerluftfahrzeug (11).

6. Eine Betankungsvorrichtung nach Anspruch 5, wobei die erste Beleuchtungseinheit (45) in der oberen Zone des Spitzenabschnittes (25) angeordnet ist und die zweite Beleuchtungseinheit (45') in der unteren Zone des Spitzenabschnittes (25) angeordnet ist.

7. Eine Betankungsvorrichtung nach Anspruch 6, wobei die Beleuchtungseinheiten (45, 45') in einem Winkelabstand von ungefähr 180° zwischen ihnen angeordnet sind.

8. Eine Betankungsvorrichtung nach einem der Ansprüche 6 bis 7, wobei jede der Beleuchtungseinheiten (45, 45') eine Quelle sichtbaren Lichts (47, 47') und eine Quelle von Infrarotlicht (57, 57') umfasst und Mittel zum Auswählen eines geeigneten Lichts (61, 61') zum Bereitstellen einer visuellen Information des Zustandes des Auslegers (21) während des Betankungsvorganges.

9. Eine Betankungsvorrichtung nach Anspruch 8, wobei die Quellen sichtbaren Lichts (47, 47') RGB-Einrichtungen sind, die ausgestaltet sind zum:
- Emittieren eines grünen Lichts, wenn die Länge des ausgefahrenen teleskopierbaren Abschnittes (25) eine geeignete Länge für den Kontakt mit dem Empfängerluftfahrzeug ist;
- Emittieren eines roten Lichts, wenn die Länge des ausgefahrenen teleskopierbaren Abschnittes (25) keine geeignete Länge für den Kontakt mit dem Empfängerluftfahrzeug ist;
- Emittieren eines gelben Lichts, wenn die Länge des ausgefahrenen teleskopierbaren Abschnittes (25) nahe ist, eine ungeeignete Länge für den Kontakt mit dem Empfängerluftfahrzeug zu sein.

10. Eine Betankungsvorrichtung nach Anspruch 8, wobei mindestens eine der Quellen sichtbaren Lichts (47, 47') eine RGB-Einrichtung ist, die ausgestaltet ist zum Emittieren von Lichtem vorgegebener Farben zum Übertragen von Information an den Piloten des Empfängerluftfahrzeuges als Alternative zu einer Funkverbindung.

11. Eine Betankungsvorrichtung nach einem der Ansprüche 9 bis 10, wobei:
- die RGB-Einrichtungen (47, 47') rote Leuchtdioden (51, 51'), grüne Leuchtdioden (53, 53') und blaue Leuchtdioden (55, 55') umfassen;
- die Quellen von Infrarotlicht (57, 57') Infrarotleuchtdioden (57, 57') sind.

12. Ein Tankerluftfahrzeug, das eine Betankungsvorrichtung nach einem der voranstehenden Ansprüche aufweist.

## Revendications

1. Appareil de ravitaillement pour l'interconnexion d'un avion-citerne (11) à un avion récepteur en vol comprenant un dispositif de perche (21) destiné à être relié audit avion-citerne (11) au moyen d'une articulation mécanique (41), ledit dispositif de perche (21) comprenant un longeron de perche (23) avec une conduite de carburant interne ayant, au niveau de son extrémité distale, une section de pointe (27) et une buse (29), ladite section de pointe (27) comprend un module d'éclairage pour éclairer ladite buse (29) pendant la nuit ou dans de mauvaises conditions météorologiques de sorte que la buse (29) devienne visible au pilote de l'avion récepteur lorsqu'elle s'approche de l'avion-citerne (11),
**caractérisé en ce que** ledit longeron de perche a une section télescopique (25), et **en ce que** ledit module d'éclairage comprend une source de lumière visible agencée pour émettre de la lumière d'une couleur prédéterminée pour l'identification d'un état particulier du dispositif de perche (21) pendant l'opération de ravitaillement.

2. Appareil de ravitaillement selon la revendication 1, dans lequel ledit module d'éclairage comprend au moins ladite source de lumière visible et une source de lumière infrarouge et un moyen destiné à sélectionner une lumière appropriée pour fournir des informations visuelles de l'état de la perche (21) pendant l'opération de ravitaillement.

3. Appareil de ravitaillement selon la revendication 1 ou 2, dans lequel ladite source de lumière visible est un dispositif RGB agencé :
pour émettre une lumière verte lorsque la longueur de la section télescopique déployée (25) est une longueur appropriée pour le contact avec l'avion récepteur ;
pour émettre une lumière rouge lorsque la longueur de la section télescopique déployée (25) n'est pas une longueur appropriée pour le contact avec l'avion récepteur ;
pour émettre une lumière jaune lorsque la longueur de la section télescopique déployée (25) est proche d'une longueur inappropriée pour le contact avec l'avion récepteur.

4. Appareil de ravitaillement selon la revendication 1, dans lequel ladite source de lumière visible est un dispositif RGB agencé pour émettre des lumières de couleurs prédéterminées pour transmettre des informations au pilote de l'avion récepteur en tant qu'alternative à une radiocommunication.

5. Appareil de ravitaillement selon l'une des revendications 1 à 4, dans lequel ledit module d'éclairage comprend au moins deux unités d'éclairage (45, 45') positionnées de manière appropriée pour faciliter la vision de la buse (29), à la fois, au pilote de l'avion récepteur et à l'opérateur de perche dans l'avion-citerne (11).

6. Appareil de ravitaillement selon la revendication 5, dans lequel la première unité d'éclairage (45) est située dans la zone supérieure de ladite section de pointe (25) et la deuxième unité d'éclairage (45') est située dans la zone inférieure de ladite section de pointe (25).

7. Appareil de ravitaillement selon la revendication 6, dans lequel lesdites unités d'éclairage (45, 45') sont situées à une distance angulaire d'environ 180° entre elles.

8. Appareil de ravitaillement selon l'une des revendications 6 à 7, dans lequel chacune desdites unités d'éclairage (45, 45') comprend une source de lumière visible (47, 47') et une source de lumière infrarouge (57, 57') et un moyen destiné à sélectionner une lumière appropriée (61, 61') pour fournir des informations visuelles de l'état de la perche (21) pendant l'opération de ravitaillement.

9. Appareil de ravitaillement selon la revendication 8, dans lequel lesdites sources de lumière visible (47, 47') sont des dispositifs RGB agencées :
pour émettre une lumière verte lorsque la longueur de la section télescopique déployée (25) est une longueur appropriée pour le contact avec l'avion récepteur ;
pour émettre une lumière rouge lorsque la longueur de la section télescopique déployée (25) n'est pas une longueur appropriée pour le contact avec l'avion récepteur ;
pour émettre une lumière jaune lorsque la longueur de la section télescopique déployée (25) est proche d'une longueur inappropriée pour le contact avec l'avion récepteur.

10. Appareil de ravitaillement selon la revendication 8, dans lequel au moins l'une desdites sources de lumière visible (47, 47') est un dispositif RGB agencé pour émettre des lumières de couleurs prédéterminées pour transmettre des informations au pilote de l'avion récepteur en tant qu'alternative à une radiocommunication.

11. Appareil de ravitaillement selon l'une des revendications 9 à 10, dans lequel :
lesdits dispositifs RGB (47, 47') comprennent des diodes électroluminescentes rouges (51, 51'), des diodes électroluminescentes vertes (53, 53') et des diodes électroluminescentes bleues (55, 55') ;
lesdites sources de lumière infrarouge (57, 57') sont des diodes électroluminescentes à infrarouge (57, 57').

12. Avion-citerne ayant un appareil de ravitaillement selon l'une des revendications précédentes.
